# EUROPEAN PATENT APPLICATION

(11) **EP 4 694 106 A1**
(43) Date of publication of application: **11.02.2026**
(21) Application number: 25193771.0
(22) Date of filing: 04.08.2025
(51) Int. Cl.: H04N 1/00, B41J 29/13

(54) **ATTACHMENT STRUCTURE OF EXTERIOR COVER**

(30) Priority: 06.08.2024 JP 2024130080
(71) Applicant: Kyocera Document Solutions Inc., Osaka-shi, Osaka 540-8585 (JP)
(72) Inventor: KISHIMOTO, Tadahisa, Osaka, 540-8585 (JP)
(74) Representative: BRP Renaud & Partner mbB Rechtsanwälte Patentanwälte Steuerberater

(57) **Abstract**

In each of side portions of an apparatus main body which are opposite each other, one of a side wall and a side frame which are opposite each other includes a side protrusion portion which protrudes laterally. The other of the side wall and the side frame which are opposite each other includes a side through hole which penetrates laterally and into which the side protrusion portion is inserted. One of a top wall and a top frame includes a top protrusion portion which protrudes in an up/down direction. The other of the top wall and the top frame includes a top through hole which penetrates in the up/down direction and into which the top protrusion portion is inserted. The top protrusion portion is locked to the periphery of the top through hole.

## Description

### BACKGROUND

The present disclosure relates to an attachment structure of an exterior cover which covers the outer surface of an apparatus main body.

In the conventional attachment structure of an exterior cover, the exterior cover includes a pair of side walls which are opposite each other and a top wall which couples upper end portions of the pair of side walls. The pair of side walls include side protrusion portions, respectively, which protrude in an opposite direction. An apparatus main body includes a pair of side frames which are opposite the pair of side walls, respectively. The pair of side frames include side recess portions, respectively, which are recessed in the opposite direction. The side protrusion portions are inserted into the side recess portions to be locked to the peripheries of the side recess portions. In this way, the exterior cover is easily attached to the apparatus main body.

However, in the conventional technique, the exterior cover may be disconnected from the apparatus main body.

The present disclosure is made in view of the foregoing, and an object of the present disclosure is to provide an attachment structure of an exterior cover in which the exterior cover is unlikely to be disconnected from an apparatus main body.

### SUMMARY

In order to solve the problem described above, an attachment structure of an exterior cover according to the present disclosure is an attachment structure of an exterior cover that covers an outer surface of an apparatus main body. The exterior cover includes a pair of side walls that are opposite each other and a top wall that couples upper end portions of the pair of side walls. The apparatus main body includes a pair of side frames and a top frame. The pair of side frames are opposite the pair of side walls, respectively. The top frame is opposite the top wall. One of the side wall and the side frame that are opposite each other includes a side protrusion portion which protrudes laterally. The other of the side wall and the side frame that are opposite each other includes a side through hole which penetrates laterally and into which the side protrusion portion is inserted. One of the top wall and the top frame that are opposite each other includes a top protrusion portion which protrudes in an up/down direction. The other of the top wall and the top frame that are opposite each other includes a top through hole which penetrates in the up/down direction and into which the top protrusion portion is inserted/ The top protrusion portion is locked to a periphery of the top through hole.

In the configuration of the present disclosure, it is possible to provide an attachment structure of an exterior cover in which the exterior cover is unlikely to be disconnected from an apparatus main body.

### BRIEF DESCRIPTION OF THE DRAWINGS

FIG. 1 is a perspective view of a post-processing device 1 using an attachment structure of an exterior cover 20 according to an embodiment of the present disclosure;
FIG. 2 is a perspective view of the post-processing device 1 using the attachment structure of the exterior cover 20 according to the embodiment of the present disclosure;
FIG. 3 is an enlarged perspective view showing an upper portion of a side plate 111 in the attachment structure of the exterior cover 20 according to the embodiment of the present disclosure;
FIG. 4 is a side view of the exterior cover 20 in the attachment structure of the exterior cover 20 according to the embodiment of the present disclosure;
FIG. 5 is an enlarged vertical cross-sectional view showing an upper portion of the exterior cover 20 in the attachment structure of the exterior cover 20 according to the embodiment of the present disclosure;
FIG. 6 is an enlarged lateral cross-sectional view showing the upper portion of the exterior cover 20 in the attachment structure of the exterior cover 20 according to the embodiment of the present disclosure; and
FIG. 7 is an enlarged perspective view showing a top protrusion portion 213a of the exterior cover 20 in the attachment structure of the exterior cover 20 according to the embodiment of the present disclosure.

### DETAILED DESCRIPTION

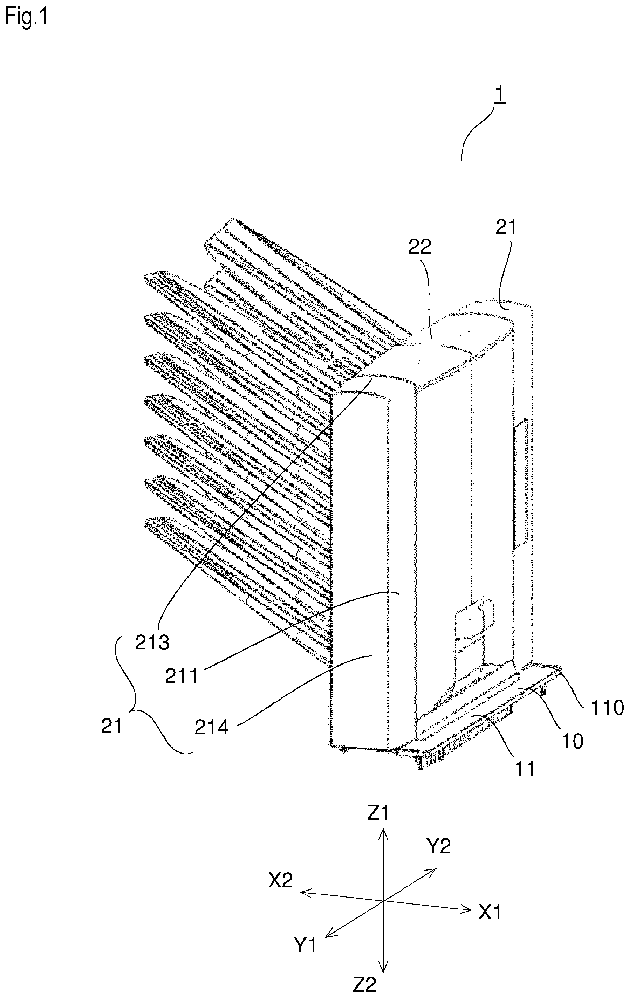

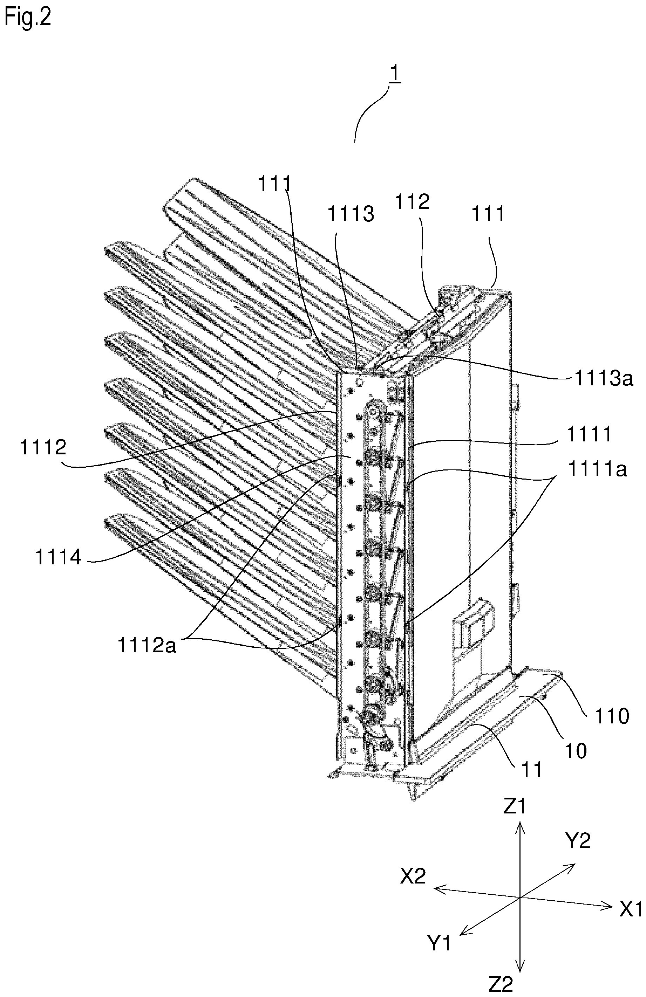

An embodiment of the present disclosure will be described in detail below with reference to drawings. FIGS. 1 and 2 are perspective views of a post-processing device 1 using an attachment structure of an exterior cover 20 according to the embodiment of the present disclosure, and FIG. 2 shows a state where exterior covers 20 and 21 are removed. The post-processing device 1 is coupled to an image forming apparatus (not shown) to from a part of an image formation system. The post-processing device 1 can be likewise coupled to, for example, a laser printer, an inkjet printer, a facsimile device and the like in addition to a digital multifunctional peripheral.

For ease of description, in a state where the post-processing device 1 is installed to be capable of being used (state shown in FIG. 1), a vertical direction is defined as an up/down direction (Z1-Z2). A surface of the post-processing device 1 shown in FIG. 1 on the front side of the plane of the figure is assumed to be a front side (front surface), and a forward/backward direction (Y1-Y2) is defined. With reference to the front side of the post-processing device 1 in the installation state, a left/right direction (X1-X2) is defined. In the present embodiment, the left/right direction (X1-X2) is orthogonal to the up/down direction (Z1-Z2) and the forward/backward direction (Y1-Y2). The left/right direction (X1-X2) is assumed to be an opposite direction in which a pair of side frames 1111 and 1112 are opposite each other, and the forward/backward direction (Y1-Y2) is assumed to be an intersection direction which intersects the opposite direction. The definition of the up/down direction does not limit the direction and the positional relationship of the exterior cover 20 during the use of the exterior cover 20.

The post-processing device 1 includes an apparatus main body 10 and the exterior covers 21 and 22 made of resin. The apparatus main body 10 includes a housing 11 made of metal. The housing 11 is formed in the shape of a rectangular parallelepiped, and in the present embodiment, a conveyance path (not shown) is arranged inside the housing 11.

The housing 11 includes a pair of side plates 111 which are opposite each other in the forward/backward direction (Y1-Y2), a bottom plate 110 and a top plate 112. The bottom plate 110 couples lower end portions of the pair of side plates 111. The top plate 112 couples upper end portions of the pair of side plates 111. Each of the side plates 111, the bottom plate 110 and the top plate 112 is formed in the shape of a rectangular plate.

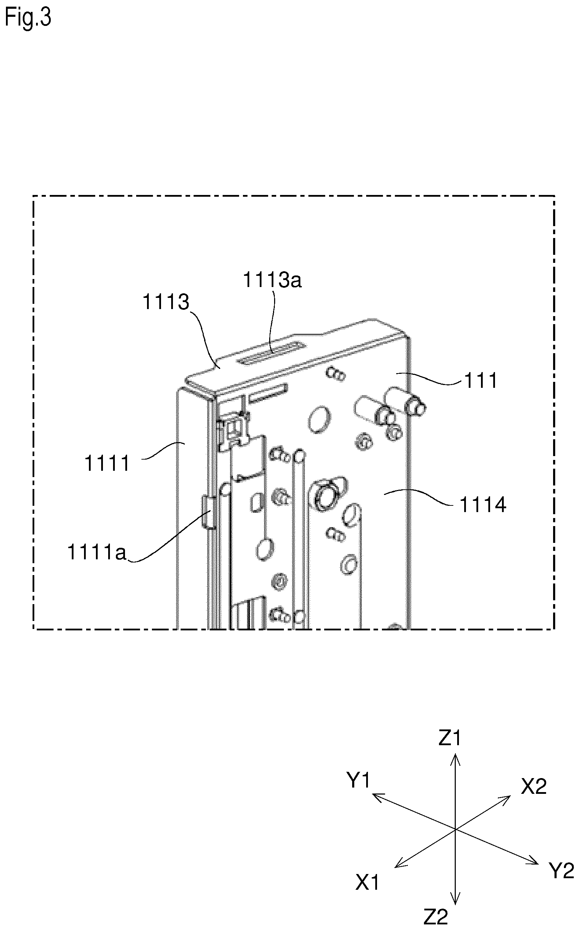

FIG. 3 is an enlarged perspective view showing an upper portion of the side plate 111. The side plate 111 includes the pair of side frames 1111 and 1112 which are opposite each other in the left/right direction (X1-X2), a top frame 1113 which couples upper end portions of the pair of side frames 1111 and 1112 and a front frame 1114 which covers end portions of the top frame 1113 and the pair of side frames 1111 and 1112 in the forward/backward direction (Y1-Y2). The top frame 1113 is opposite a top wall 213 which will be described later.

The side frame 1111 includes a side through hole 1111a which penetrates in the left/right direction (X1-X2). In the present embodiment, the side through holes 1111a are provided at two locations in the up/down direction (Z1-Z2). The side frame 1112 includes a side through hole 1112a which penetrates in the left/right direction (X1-X2). In the present embodiment, the side through holes 1112a are provided at two locations in the up/down direction (Z1-Z2) (see FIG. 2). The top frame 1113 includes a top through hole 1113a which penetrates in the up/down direction (Z1-Z2).

The exterior cover 21 is attached to the side plates 111. The exterior cover 22 is attached to the top plate 112.

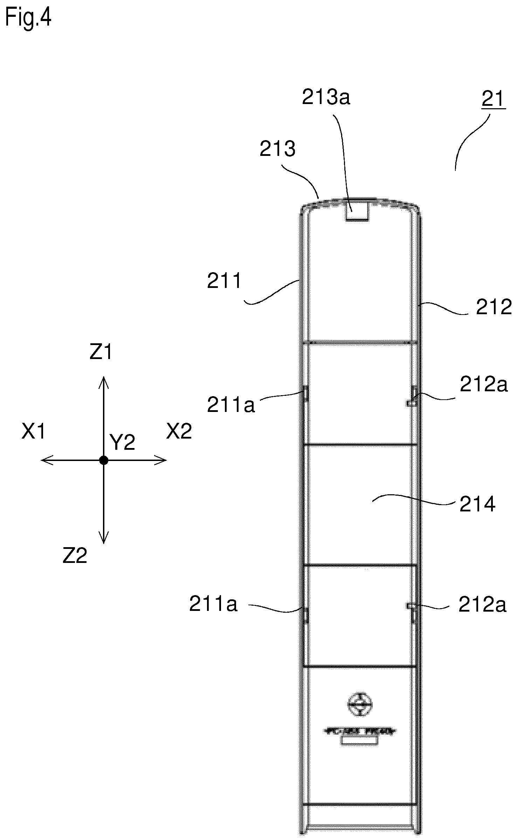

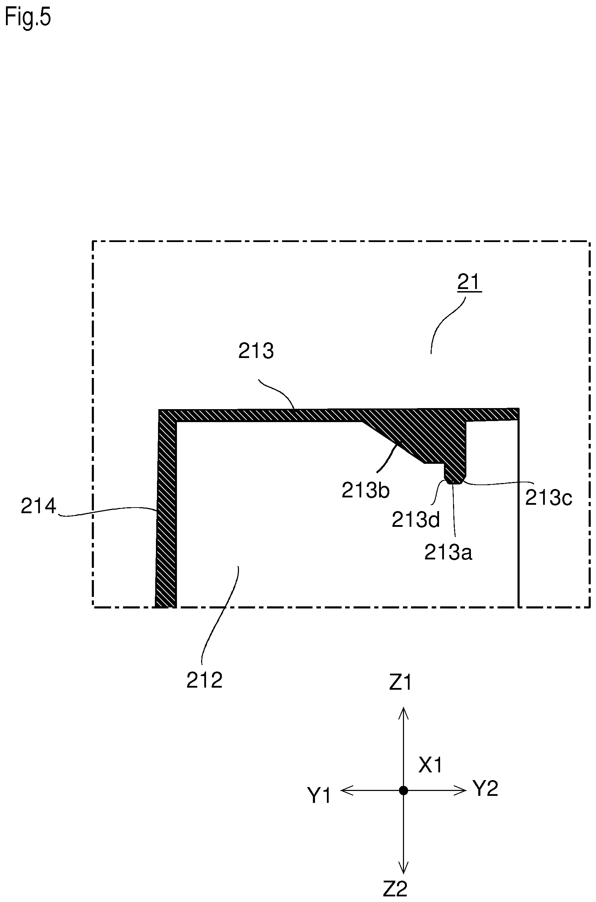

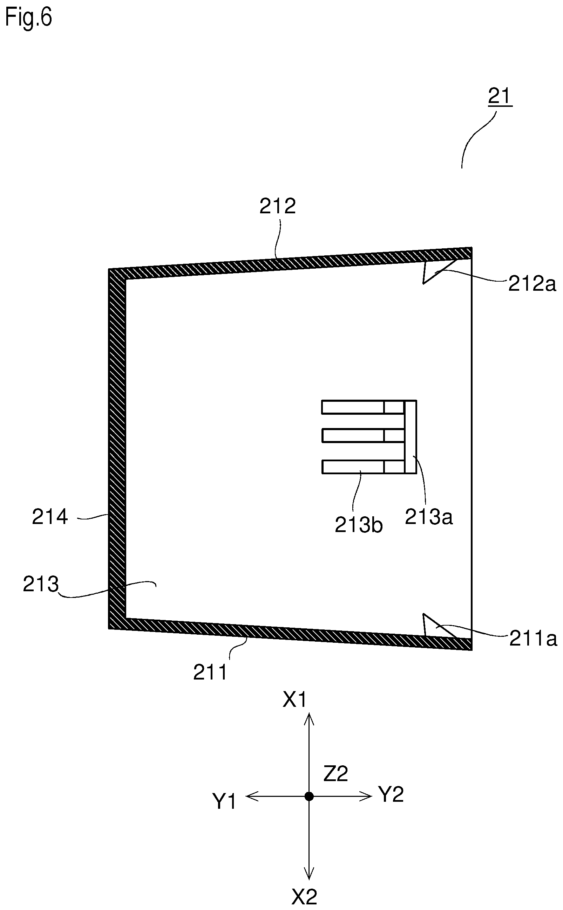

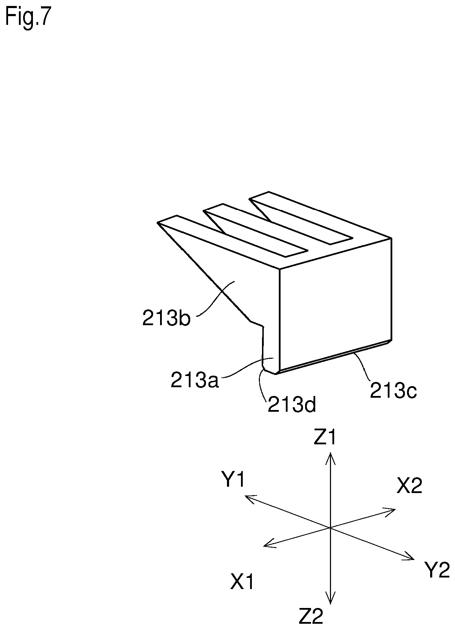

FIG. 4 is a side view of the exterior cover 21, and FIG. 5 is a vertical cross-sectional view showing an upper portion of the exterior cover 21. FIG. 6 is a lateral cross-sectional view showing the upper portion of the exterior cover 21, and FIG. 7 is an enlarged perspective view showing a top protrusion portion 213a. Although the top protrusion portion 21 is integral with the top wall 213, the top wall 213 is omitted in FIG. 7. The exterior cover 21 includes a pair of side walls 211 and 212 which are opposite each other in the left/right direction (X1-X2), the top wall 213 which couples upper end portions of the pair of side walls 211 and 212 and a front wall 214 which covers end portions of the top wall 213 and the pair of side walls 211 and 212 in the forward/backward direction (Y1-Y2).

The side wall 211 includes a side protrusion portion 211a which protrudes laterally in the left/right direction (X1-X2) (see FIG. 6). In the present embodiment, the side protrusion portions 211a are provided at two locations in the up/down direction (Z1-Z2) (see FIG. 4). The side protrusion portion 211a is inserted into the side through hole 1111a.

The side wall 212 includes a side protrusion portion 212a which protrudes laterally in the left/right direction (X1-X2) (see FIG. 6). In the present embodiment, the side protrusion portions 212a are provided at two locations in the up/down direction (Z1-Z2) (see FIG. 4). The side protrusion portion 212a is inserted into the side through hole 1112a.

The top wall 213 includes the top protrusion portion 213a which protrudes in a down direction (Z2 direction). In the present embodiment, the top protrusion portions 213a is provided at one location. The top protrusion portion 213a is inserted into the top through hole 1113a. In the present embodiment, the top protrusion portion 213a and the top through hole 1113a extend in the left/right direction (opposite direction (X1-X2) in which the pair of side frames 1111 and 1112 are opposite each other).

The top protrusion portion 213a includes a pair of inclination surfaces 213c and 213d at a tip end portion which approach each other in the forward/backward direction (intersection direction (Y1-Y2) intersecting the opposite direction (X1-X2) ) as the pair of inclination surfaces 213c and 213d extend to a tip end.

The top protrusion portion 213a includes a rib 213b which protrudes in the forward/backward direction (intersection direction (Y1-Y2)) from a base portion. In the present embodiment, the three ribs 213b are formed side by side in the left/right direction (opposite direction (X1-X2)). A plurality of ribs 213b are provided to be able to reinforce the top protrusion portion 213a.

A pair of exterior covers 21 are respectively attached to both side portions of the apparatus main body 10 in the forward/backward direction (Y1-Y2), and in the top frames 1113 arranged on both the side portions of the apparatus main body 10, the top through holes 1113a are displaced from the center to one side (in the present embodiment, the right side X1) in the left/right direction (opposite direction (X1-X2)) (see FIG. 3). In this way, the pair of exterior covers 21 can be properly attached to the corresponding top frames 1113.

The top protrusion portion 213a is inserted into the top through hole 1113a while the inclination surfaces 213c and 213d are sliding on the periphery of the top through hole 1113a. After the insertion, the tip end portion of the top protrusion portion 213a is locked to the periphery of the top through hole 1113a. In this way, the top protrusion portion 213a is press-fitted into the top through hole 1113a, and thus the top wall 213 and the top frame 1113 are firmly fixed together. The inclination surfaces 213c and 213d are provided, and thus it is possible to easily insert the top protrusion portion 213a into the top through hole 1113a.

The rib 213b is in contact with the periphery of the top through hole 1113a in a state where the tip end portion of the top protrusion portion 213a is inserted in the top through hole 1113a. In other words, the rib 213b is not inserted into the top through hole 1113a. In this way, when the exterior cover 21 is attached, a gap is held between the top frame 1113 and the top wall 213 in the up/down direction (Z1-Z2).

In the exterior cover 21, the top protrusion portion 213a is first inserted into the top through hole 1113a, and then the side protrusion portion 211a is inserted into the side through hole 1111a. In this way, it is possible to easily locate the exterior cover 21 relative to the side plate 111. Hence, the exterior cover 21 can easily be attached to the side plate 111. In the exterior cover 21, three surfaces of the side walls 211 and 212 and the top wall 213 are locked to the side plate 111. Therefore, it is possible to provide the attachment structure of the exterior cover 21 in which the exterior cover 21 is unlikely to be disconnected from the apparatus main body 10.

Here, the top protrusion portion 213a and the top through hole 1113a extend in the left/right direction (opposite direction (X1-X2) in which the pair of side frames 1111 and 1112 are opposite each other). Hence, in a state where the tip end portion of the top protrusion portion 213a is inserted in the top through hole 1113a, the exterior cover 21 is unlikely to rotate with the top protrusion portion 213a serving as a center axis. Therefore, , it is possible to provide the attachment structure of the exterior cover 21 in which the exterior cover 21 is more unlikely to be disconnected from the apparatus main body 10.

Although the embodiment of the present disclosure has been described above, the scope of the present disclosure is not limited to the embodiment, and various changes can be made without departing from the spirit of the disclosure. For example, in the present embodiment, the side protrusion portion 211a is provided in the side wall 211, the side protrusion portion 212a is provided in the side wall 212 and the top protrusion portion 213a is provided in the top wall 213. The side through hole 1111a is provided in the side frame 1111, the side through hole 1112a is provided in the side frame 1112 and the top through hole 1113a is provided in the top frame 1113. However, the side through hole may be provided in the side walls 211 and 212, and the side protrusion portion may be provided in the side frame. The top through hole may be provided in the top wall 213, and the top protrusion portion may be provided in the top frame 1113. The side protrusion portion may be provided in one of the side walls 211 and 212, and the side through hole may be provided in the other.

## Claims

1. An attachment structure of an exterior cover that covers an outer surface of an apparatus main body,
wherein the exterior cover includes
a pair of side walls that are opposite each other and
a top wall that couples upper end portions of the pair of side walls,
the apparatus main body includes
a pair of side frames that are opposite the pair of side walls, respectively and
a top frame that is opposite the top wall,
one of the side wall and the side frame that are opposite each other includes a side protrusion portion which protrudes laterally,
the other of the side wall and the side frame that are opposite each other includes a side through hole which penetrates laterally and into which the side protrusion portion is inserted,
one of the top wall and the top frame that are opposite each other includes a top protrusion portion which protrudes in an up/down direction,
the other of the top wall and the top frame that are opposite each other includes a top through hole which penetrates in the up/down direction and into which the top protrusion portion is inserted and
the top protrusion portion is locked to a periphery of the top through hole.

2. The attachment structure of the exterior cover according to claim 1,
wherein the top protrusion portion and the top through hole extend in an opposite direction in which the pair of side frames are opposite each other.

3. The attachment structure of the exterior cover according to claim 2,
wherein the top protrusion portion includes a pair of inclination surfaces at a tip end portion that approach each other in an intersection direction intersecting the opposite direction as the pair of inclination surfaces extend to a tip end.

4. The attachment structure of the exterior cover according to claim 3,
wherein the top protrusion portion includes a rib that protrudes in the intersection direction from a base portion, and
the rib is in contact with the periphery of the top through hole in a state where the tip end portion of the top protrusion portion is inserted in the top through hole.

5. The attachment structure of the exterior cover according to claim 4,
wherein a plurality of ribs each being the rib are arranged side by side in the opposite direction.

6. The attachment structure of the exterior cover according to claim 1,
wherein the exterior cover is attached to each of side portions of the apparatus main body that are opposite each other, and
in the top frame arranged on each of the side portions of the apparatus main body, the top protrusion portion or the top through hole is displaced from a center to one side in an opposite direction in which the pair of side frames are opposite each other.
